# EUROPÄISCHE PATENTSCHRIFT

(11) **EP 2 632 761 B1**
(45) Veröffentlichungstag und Bekanntmachung des Hinweises auf die Patenterteilung: **23.03.2016**
(21) Anmeldenummer: 11754642.4
(22) Anmeldetag: 31.08.2011
(51) Int. Cl.: B60L 11/18, B60L 3/00, B60L 3/04

(54) **VERFAHREN ZUM LADEN EINES HYBRID- ODER ELEKTROFAHRZEUGS**
METHOD FOR CHARGING A HYBRID VEHICLE OR ELECTRIC VEHICLE
PROCÉDÉ DE CHARGE D'UN VÉHICULE ÉLECTRIQUE OU HYBRIDE

(30) Priorität: 28.10.2010 DE 102010043056
(43) Veröffentlichungstag der Anmeldung: 04.09.2013
(73) Patentinhaber: Robert Bosch GmbH, 70442 Stuttgart (DE)
(72) Erfinder: HERZOG, Achim, 71522 Backnang (DE); ECKERT, Bernd, 71665 Vaihingen an der Enz (DE)
(86) Internationale Anmeldenummer: PCT/EP2011/064972
(87) Internationale Veröffentlichungsnummer: WO 2012/055612

(56) Entgegenhaltungen:
- DE-A1-102009 039 913
- DE-C1- 4 116 336
- US-A1- 2006 137 929
- US-A1- 2011 196 545

## Beschreibung

### Stand der Technik

Die Erfindung geht aus von einem Verfahren nach dem Oberbegriff des unabhängigen Anspruchs.

Verschiedenartige Verfahren zum Laden von Hybrid- oder Elektrofahrzeugen sind bekannt. Ein derartiges Verfahren zeigt beispielsweise die DE 692 18 450 T2. Ein Hybrid- oder Elektrofahrzeug weist eine Traktionsbatterie (Hochvoltbatterie) auf, die über eine Ladeeinrichtung geladen wird. Einerseits kann die Ladeeinrichtung direkt im Hybrid- oder Elektrofahrzeug verbaut sein, die während des Ladevorgangs über ein Ladekabel mit dem Stromnetz verbunden ist. Andererseits kann die Ladeeinrichtung Teil einer ortsfesten, externen Ladestation sein, wobei die Ladestation bereits dauerhaft mit dem Stromnetz verbunden ist. Wird das Fahrzeug über eine ortsfeste, externe Ladestation geladen, wird das Fahrzeug über ein Ladekabel mit dieser Ladestation verbunden.

Die US 2006/137929 A1 zeigt ein Fahrzeug, vorzugsweise ein Hybrid- oder Elektrofahrzeug, dessen interner Lade- bzw. Entladevorgang des elektrischen Energiespeichers im Fall einer Kollision unterbrochen wird. Das Sicherheitssystem des Fahrzeugs unterbricht den Lade- bzw. Entladevorgang, wenn die Kontrolleinheit eine Fahrzeugkollision über die im Fahrzeug verbauten Kollisionssensoren bzw. Crashsensoren erfasst.

Da bei dem Ladevorgang von Hybrid- oder Elektrofahrzeugen hohe Ladeströme über das Ladekabel fließen, ist aus der genannten DE 692 18 450 T2 ein Verriegelungsmittel für eine Ladeeinrichtung bekannt. Das Verriegelungsmittel kann Mittel umfassen, wie etwa einen Hebel, welchem ein Schalter auf der Fahrzeugseite zugeordnet ist, dass der gesamte Ladebetrieb davon abhängig ist, ob der Schalter geschlossen wurde. Ist das Verriegelungsmittel geöffnet, ist der Schalter geöffnet, wodurch kein Laden möglich ist. Zusätzlich wird jegliche Möglichkeit von körperlichem Kontakt mit unter Spannung stehenden Hochspannungsanschlüssen oder Verbinderkontakten verhindert. An diesem Verriegelungsmittel ist nachteilig, dass ein Abriss des Ladekabels in Folge der Bewegung des Hybrid- oder Elektrofahrzeugs nicht automatisch zur Öffnung des Verriegelungsmittels und damit zu einer Unterbrechung des Ladevorgangs bzw. des Ladestromes führt. Somit liegen nachteilig an den als Folge eines abgerissenen Ladekabels offenen Kabelenden gefährliche Spannungen vor, die eine lebensgefährliche Bedrohung des Fahrers oder anderer Personen darstellen.

### Vorteile der Erfindung

Das erfindungsgemäße Verfahren mit dem Kennzeichen des Anspruchs 1 hat den Vorteil, dass es eine Strategie darstellt, um die Sicherheitsgefährdung des Fahrers oder anderer Personen durch die als Folge eines abgerissenen Ladekabels offenen Kabelenden und die an ihnen anliegenden gefährlichen Spannungen zu vermeiden. Hierzu ist vorgesehen, dass aufgrund einer von einem Beschleunigungssensor gemessenen Beschleunigung des Fahrzeugs der Ladevorgang der Traktionsbatterie von der Trenneinrichtung unterbrochen wird, wenn die gemessene Beschleunigung eine vorgegebene Bedingung erfüllt.

Zum Laden abgestellte Fahrzeuge sind über ein Ladekabel mit dem Stromnetz verbunden und dürfen, während diese Verbindung besteht bzw. der Ladevorgang stattfindet, nicht bewegt werden. Fährt auf das so abgestellte und ladende Fahrzeug ein anderes Fahrzeug auf bzw. rollt das ladende Fahrzeug beispielsweise infolge einer nicht angezogenen Handbremse und eines nicht eingelegten Ganges von selbst los, besteht die Gefahr, dass die Ladeleitung reißt oder anderweitig beschädigt wird. Vorteilhaft wird durch Messung mit einem Beschleunigungssensor ermittelt, ob eine unbeabsichtigte Bewegung erfolgt. Liegt eine unbeabsichtigte Bewegung vor, wird durch eine gezielte Abschaltung durch die Trenneinrichtung der Ladevorgang unterbrochen. Die Trenneinrichtung ist somit in der Lage, die Ladung der Traktionsbatterie abzubrechen und die Ladeleitung noch vor dem Abreißen spannungsfrei zu schalten.

Durch die in den abhängigen Ansprüchen genannten Maßnahmen sind vorteilhafte Weiterbildungen des in dem unabhängigen Anspruch angegebenen Verfahrens möglich.

Bei dem in dem unabhängigen Anspruch beschriebenen Verfahren zum Laden eines Fahrzeugs ist die vorgegebene Bedingung vorteilhaft dann erfüllt, wenn aufgrund der Beschleunigung des Fahrzeugs das Laden der Traktionsbatterie ein Sicherheitsrisiko darstellt. Das Sicherheitsrisiko besteht beispielsweise, wenn das Fahrzeug so beschleunigt wird, dass ein Abriss des Ladekabels resultiert.

Vorteilhaft läuft das erfindungsgemäße Verfahren dann ab, wenn der Messwert, der mittels des Beschleunigungssensors gemessen wird, einen vorgegebenen Schwellenwert A_1 einnimmt oder diesen überschreitet. Fährt beispielsweise ein anderes Auto auf das ladende Fahrzeug auf, werden durch den Aufprall hohe Beschleunigungen des ladenden Fahrzeugs innerhalb eines kurzen Zeitraumes erzeugt. Wird der Schwellenwert A_1 so gewählt, dass der Ladevorgang nur aufgrund hoher Beschleunigungen abgebrochen wird, wird auf diese Art und Weise vermieden, dass Fahrzeugbewegungen, bei denen der Ladevorgang nicht unterbrochen werden muss, z.B. Öffnen des Kofferraumes oder der Motorhaube, zu einer Abschaltung bzw. Unterbrechung des Ladevorgangs führen.

Vorteilhaft ist die vorgegebene Bedingung dann erfüllt, wenn der Messwert, der durch den Beschleunigungssensor gemessen wird, innerhalb eines vorgegebenen Zeitraums t_1 einen vorgegebenen Schwellenwert A_2 einnimmt oder diesen überschreitet. Eine Rollbewegung des Fahrzeugs, die aufgrund eines nicht eingelegten Ganges und einer nicht angezogenen Handbremse resultiert, weist über einen längeren Zeitraum kleinere Beschleunigungswerte auf, als es der Fall bei dem Auffahren eines Autos auf das zu ladende Auto der Fall ist. Wenn der Messwert, der durch den Beschleunigungssensor gemessen wird, einen vorgegebenen Schwellenwert A_2 innerhalb eines vorgegebenen Zeitraums t_1 einnimmt oder diesen überschreitet, liegt ein beispielsweise durch eine Rollbewegung verursachtes Sicherheitsrisiko vor, das zu einem Abriss des Ladekabels führen kann. Der Ladevorgang der Traktionsbatterie wird dann durch die Trenneinrichtung unterbrochen.

Bei dem erfindungsgemäßen Verfahren wird vorteilhaft in einem ersten Schritt 101 eine Bewegung des Fahrzeugs durch den Beschleunigungssensor gemessen und der mindestens eine Messwert an ein Steuergerät übermittelt. In einem zweiten Schritt 102 wird ein Signal von dem Steuergerät an die Trenneinrichtung weitergegeben und in einem dritten Schritt 103 der Ladevorgang der Traktionsbatterie durch die Trenneinrichtung unterbrochen. Vorteilhaft ist der Beschleunigungssensor der Beschleunigungssensor des Airbagsystems oder der Diebstahlwarnanlage.

Vorteilhaft wird als Steuergerät ein Airbagsystem oder eine Diebstahlwarnanlage verwendet. Das Airbagsystem verfügt über Beschleunigungssensoren, um im Fall eines Verkehrsunfalls des Wagens die üblichen Rückhaltemittel wie z.B. Gurtstraffer oder Airbag auszulösen. Eine Diebstahlwarnanlage ist ebenfalls mit Beschleunigungssensoren ausgerüstet, die beispielsweise Erschütterungen erfassen können. Sie ist dauerhaft angeschaltet bzw. aktiv, wenn das Auto abgeschaltet ist und sich im Stillstand befindet bzw. parkt. Diese genannten Beschleunigungssensoren des Airbagsystems oder der Diebstahlwarnanlage können vorteilhaft eingesetzt werden, um die Bewegung des Fahrzeugs während des Ladevorgangs festzustellen.

Vorteilhaft werden die Trenneinrichtung und / oder die Beschleunigungssensoren an einem Einbauort des Fahrzeugs eingebaut, der frei von Eigenschwingungen ist. Dadurch wird vermieden, dass aus Eigenschwingungen des Fahrzeugs Bewegungen resultieren, die Messwerte des Beschleunigungssensors zur Folge haben, die wiederum zur Abschaltung des Ladevorgangs durch die Trenneinrichtung führen.

Vorteilhaft ist die Trenneinrichtung Teil eines Stromnetzanschlusses. Wird das ladende Fahrzeug aufgrund einer Rollbewegung, die aus einem nicht eingelegten Gang und einer nicht angezogenen Handbremse resultiert bzw. durch das Auffahren eines fremden Fahrzeuges beschleunigt, trennt die Trenneinrichtung den Ladevorgang direkt im Stromnetzanschluss. Der Stromnetzanschluss kann dabei ein Stecker sein, der mit einer Steckdose verbunden wird, über die Strom aus dem Gleich- oder Wechselstromnetz bezogen wird. Der Stromnetzanschluss kann aber auch eine Steckdose sein, über die Strom aus dem Gleich- oder Wechselstromnetz für den Ladevorgang bezogen werden kann. Durch die Trennung des Ladevorgangs durch die Trenneinrichtung direkt im Stromnetzanschluss ist das Ladekabel somit spannungsfrei und beide offenen Enden des gerissenen Ladekabels stellen kein Sicherheitsrisiko mehr dar.

Die Trenneinrichtung kann vorteilhaft auch Teil einer externen, ortsfesten Ladestation sein. Da die im Fahrzeug verbaute Ladeeinrichtung einen gewissen Bauraum fordert, können somit Gewicht und Kosten gespart werden, da einerseits die Trenneinrichtung im Fahrzeug komplett entfällt und andererseits nicht jedes Fahrzeug mit einer Trenneinrichtung ausgerüstet werden muss. Durch solche Ladestationen ist eine Vereinheitlichung des für Hybrid- und Elektrofahrzeuge notwendigen Ladeverfahrens möglich.

Vorteilhaft ist das Steuergerät während des Ladevorgangs über mindestens eine Datenleitung mit der Trenneinrichtung verbunden. Somit kann die Bewegung des Fahrzeugs über die Datenleitung der Trenneinrichtung unabhängig von ihrem Einbauort mitgeteilt werden.

Vorteilhaft wird die Unterbrechung des Ladevorgangs durch akustische oder optische Signale angezeigt, wenn es zu einer Bewegung des Fahrzeugs während des Ladevorgangs kommt. Durch diese Signale werden sowohl der Fahrer als auch andere Personen gewarnt und darauf hingewiesen, dass der Ladevorgang unterbrochen wurde. Wurde die Ladeleitung nach Unterbrechung des Ladevorgangs beschädigt, sind die durch die Warnsignale gewarnten Personen informiert, dass offenliegende Kabelenden möglicherweise eine Gefahr darstellen.

### Zeichnung

Die Erfindung wird nachfolgend in Ausführungsbeispielen anhand der zugehörigen Zeichnungen näher erläutert.
- Figur 1: zeigt eine schematische Darstellung eines Fahrzeugs, das mit dem Stromnetz verbunden ist und geladen wird;
- Figur 2: zeigt schematisch ein Ablaufdiagramm zur Erläuterung des Verfahrens;
- Figur 3: zeigt eine schematische Darstellung eines über der Zeit t aufgetragenen Messwertes des Beschleunigungssensors;
- Figur 4: zeigt eine weitere schematische Darstellung eines über der Zeit t aufgetragenen Messwertes des Beschleunigungssensors;
- Figur 5: zeigt schematisch die Darstellung eines mit einer ortsfesten, externen Ladestation verbundenen Fahrzeugs, das über die Ladestation geladen wird.

### Ausführungsformen der Erfindung

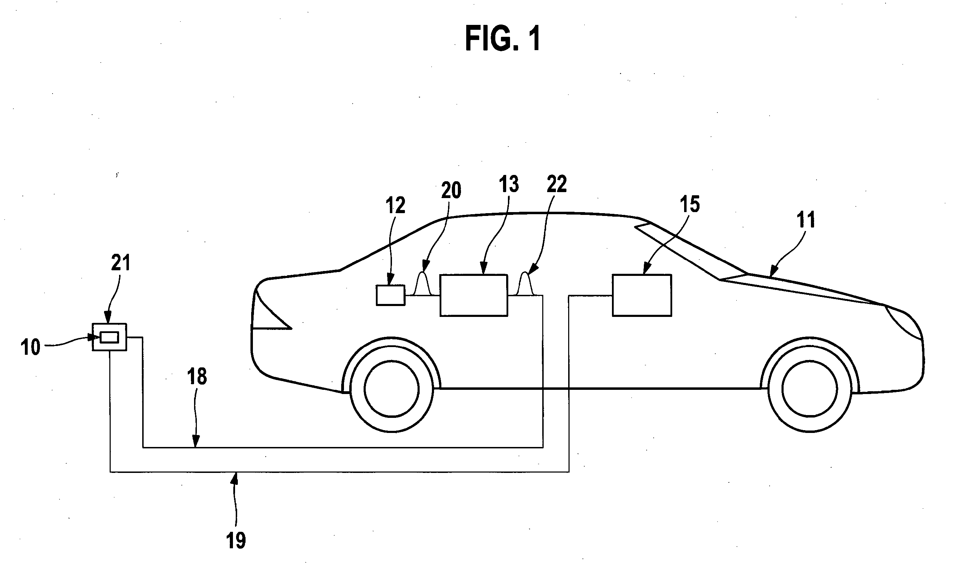

Figur 1 zeigt als Ausführungsbeispiel der Erfindung schematisch ein Fahrzeugs 11, beispielsweise eines Hybrid- oder Elektrofahrzeugs, während eines Ladevorgangs. Das Fahrzeug 11 weist mindestens einen Beschleunigungssensor 12 auf, der mit einem Steuergerät 13 verbunden ist. Das Steuergerät 13 kann beispielsweise ein Airbagsystem oder eine Diebstahlwarnanlage sein. Das Steuergerät ist mit einer Trenneinrichtung 10 verbunden, über die der Ladevorgang der mindestens einen Traktionsbatterie 15 unterbrochen werden kann. Der Beschleunigungssensor 12 ist in dem Fahrzeug 11 an einem Einbauort eingebaut, der frei von Eigenschwingungen ist, um ein unbeabsichtigten Abbruch des Ladevorganges durch die Trenneinrichtung 10 zu vermeiden. Weiterhin ist die Trenneinrichtung 10 Teil eines Stromnetzanschlusses 21, der beispielsweise mit einem Wechsel- oder Gleichstromnetz verbunden ist. Der Stromnetzanschluss 21 ist mit der Traktionsbatterie 15 verbunden. Das Fahrzeug 11 ist zum Laden der Traktionsbatterie 15 abgestellt und befindet sich im Stillstand. Falls während des Ladevorgangs der Traktionsbatterie 15 eine beabsichtigte oder unbeabsichtigte Bewegung des Fahrzeugs 11 erfolgt, beispielsweise durch eine gelöste Handbremse und einen nicht eingelegten Gang oder durch das Auffahren eines fremden Fahrzeugs (Unfall bzw. Crash), wird die Bewegung des Fahrzeugs 11 durch den Beschleunigungssensor 12 gemessen. Der Messwert 20 wird an das Steuergerät 13 übermittelt und dieses schickt über die Datenleitung 18 ein Signal 22 an die Trenneinrichtung 10, woraufhin die Trenneinrichtung 10 den Ladevorgang der Traktionsbatterie 15 unterbricht. Die Unterbrechung des Ladevorgangs wird durch akustische Signale, wie beispielsweise Ertönen einer Hupe bzw. Signale eines Lautsprechers, oder optische Signale, wie beispielsweise Blinken eines Lichtes, angezeigt. Der Fahrer oder andere Personen werden somit über die Unterbrechung des Ladevorgangs des Fahrzeuges 11 informiert. Führt die Bewegung des Fahrzeugs 11 zum Abreißen bzw. zum Bruch des Ladekabels 19, kann die Trenneinrichtung 10 das Ladekabel 19 noch vor dem Abreißen spannungsfrei schalten. Liegen nach einem möglichen Abreißen des Ladekabels 19 offene Kabelenden des Ladekabels 19 vor, liegen an diesen nach Unterbrechung des Ladevorgangs keine für den Fahrer oder andere Personen gefährlichen Spannungen mehr an. Fahrzeugseitig kann das Ladekabel durch eine weitere Trenneinrichtung (in der Figur 1 nicht dargestellt), die sich im Fahrzeug befindet, ebenfalls spannungsfrei geschaltet werden.

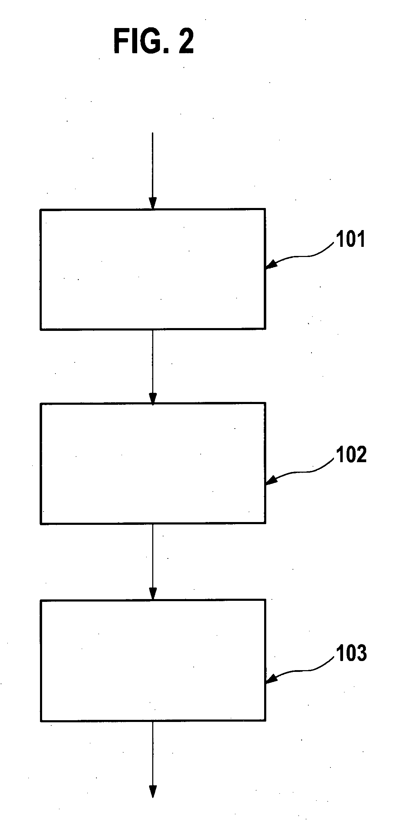

Figur 2 zeigt ein Schema des Verfahrens als Ausführungsbeispiel der Erfindung. Im ersten Schritt 101 wird durch einen Beschleunigungssensor 12 eine Bewegung des Fahrzeugs 11, welches ein Hybrid- oder Elektrofahrzeug sein kann, gemessen und der mindestens eine Messwert 20 an ein Steuergerät 13, beispielsweise ein Airbagsystem oder eine Diebstahlwarnanlage, übermittelt. Im zweiten Schritt 102 des Verfahrens gibt das Steuergerät 13 ein Signal 22 an die Trenneinrichtung 10 weiter, woraufhin im dritten Verfahrensschritt 103 der Ladevorgang der Traktionsbatterie 15 durch die Trenneinrichtung 10 unterbrochen wird.

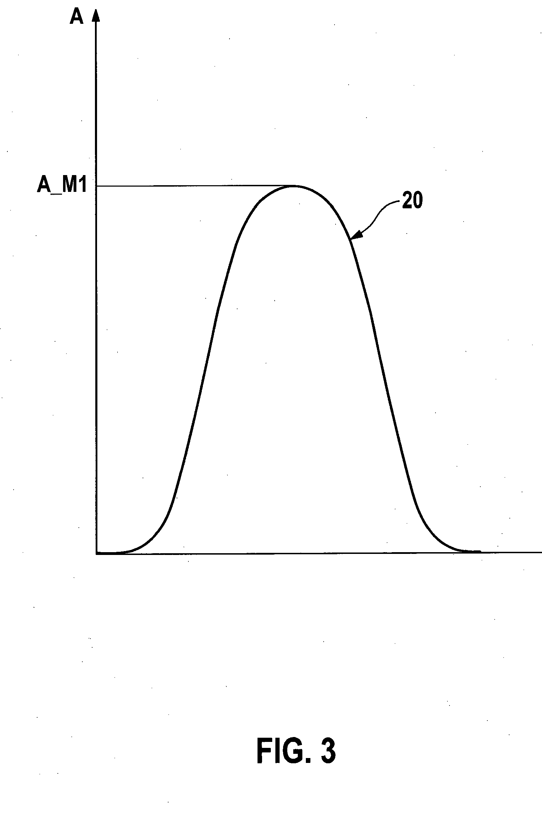

Figur 3 zeigt schematisch als weiteres Ausführungsbeispiel der Erfindung ein Beispiel eines über der Zeit t aufgetragenen Messwertes 20 eines Beschleunigungssensors 12. Der Messwert 20 besitzt eine Amplitude A_M1. Das Verfahren läuft dann ab, wenn der Messwert 20 bzw. die Amplitude A_M1 des Messwertes des Beschleunigungssensors 12 einen vorgegebenen Schwellenwert A_1 einnimmt oder diesen überschreitet. Der Schwellenwert A_1 ist so gewählt, dass leichte Bewegungen des Fahrzeugs 11, die z.B. aus dem Öffnen des Kofferraumes, einer der Fahrzeugtüren oder der Motorhaube des Fahrzeugs 11 resultieren, nicht zum Abbruch des Ladevorgangs führen.

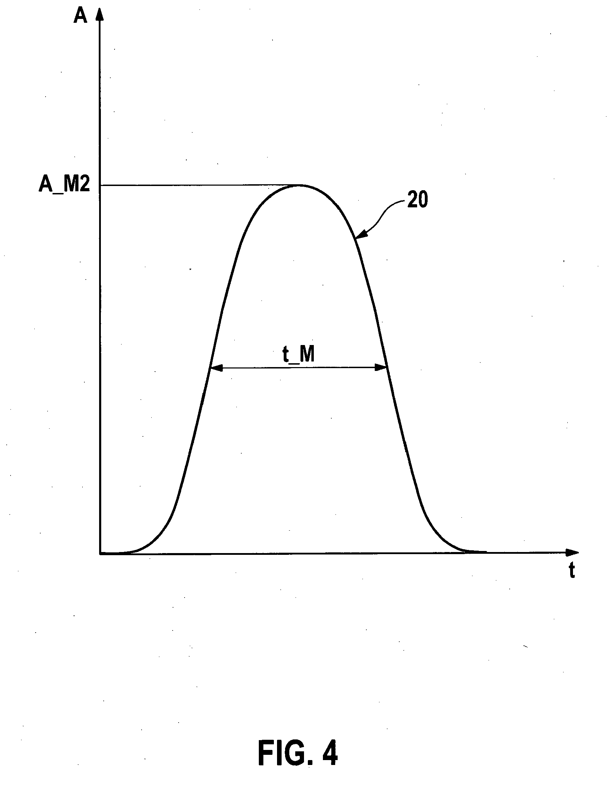

Figur 4 zeigt schematisch als weiteres Ausführungsbeispiel der Erfindung ein Beispiel eines über der Zeit t aufgetragenen Messwertes 20 eines Beschleunigungssensors 12. Der Messwert 20 besitzt eine Amplitude A_M2 und eine Dauer t_M. Das Verfahren läuft dann ab, wenn der Messwert 20 bzw. die Amplitude A_M2 des Beschleunigungssensors 12 einen vorgegebenen Schwellenwert A_2 während eines vorgegebenen Zeitraumes t_1 einnimmt oder diesen überschreitet. Ein Fahrzeug 11, das sich aufgrund des Auffahrens eines fremden Autos auf das Fahrzeug 11 bewegt, führt eine schnelle bzw. ruckartige Bewegung aus. Diese Bewegung ist wesentlich schneller als die Bewegung, die beispielsweise bei langsamen Losrollen des Fahrzeuges 11 aufgrund einer gelösten Handbremse und / oder nicht eingelegten Ganges vorliegt. Der Schwellenwert A_2 und der Zeitraum t_1 sind so gewählt, dass leichte Bewegungen des Fahrzeugs 11, die z.B. aus dem Öffnen des Kofferraumes, einer der Fahrzeugtüren, der Motorhaube des Fahrzeugs 11 oder leichten Rüttelbewegungen am Fahrzeug 11 resultieren, nicht zum Abbruch des Ladevorgangs führen.

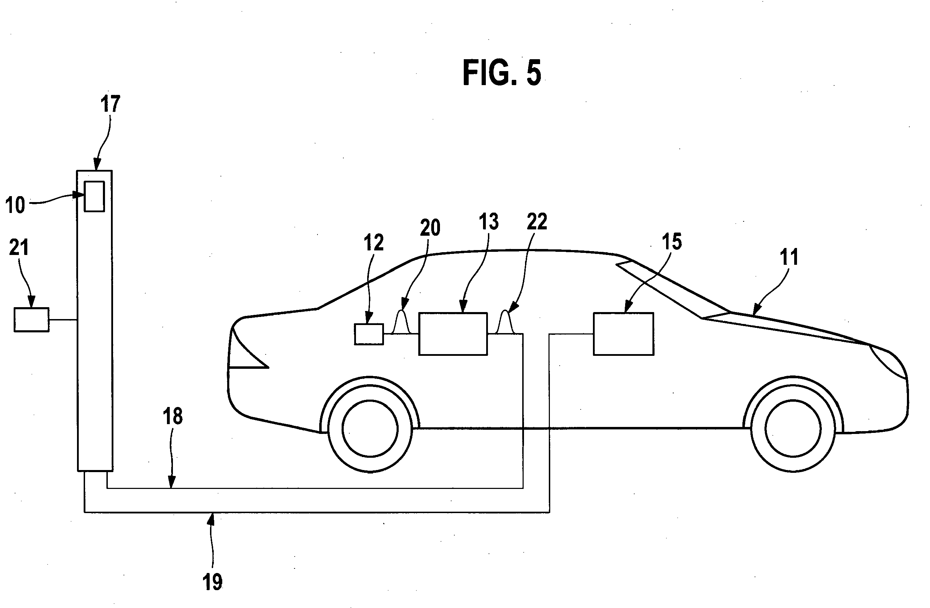

Figur 5 zeigt als weiteres Ausführungsbeispiel der Erfindung schematisch ein Fahrzeugs 11, beispielsweise eines Hybrid- oder Elektrofahrzeugs, während eines Ladevorgangs. Das Fahrzeug 11 weist mindestens einen Beschleunigungssensor 12 auf, der mit einem Steuergerät 13 verbunden ist. Das Steuergerät 13 kann beispielsweise ein Airbagsystem oder eine Diebstahlwarnanlage sein. Weiterhin besitzt das Fahrzeug 11 mindestens eine Traktionsbatterie 15, die über eine ortsfeste, externe Ladestation 17 geladen wird. Die Trenneinrichtung 10 ist Teil der Ladestation 17. Die Traktionsbatterie 15 ist mit der Ladestation 17 über ein Ladekabel 19 verbunden und wird über dieses Ladekabel 19 beladen. Das Steuergerät 13 ist mit der Ladestation 17 über eine Datenleitung 18 verbunden. Die Datenleitung 18 ist Teil des Ladekabels 19. Die Ladestation 17 ist dauerhaft an das Stromnetz 21, beispielweise ein Wechselstrom- oder Gleichstromnetz, angeschlossen. Der Beschleunigungssensor 12 ist in dem Fahrzeug 11 an einem Einbauort eingebaut, der frei von Eigenschwingungen ist, um ein unbeabsichtigten Abbruch des Ladevorganges durch die Ladeeinrichtung 10 zu vermieden. Das Fahrzeug 11 ist zum Laden der Traktionsbatterie 15 abgestellt und befindet sich im Stillstand. Falls während des Ladevorgangs der Traktionsbatterie 15 eine beabsichtigte oder unbeabsichtigte Bewegung des Fahrzeugs 11 erfolgt, beispielsweise durch eine gelöste Handbremse und einen nicht eingelegten Gang oder durch das Auffahren eines fremden Fahrzeugs (Unfall bzw. Crash), wird die Bewegung des Fahrzeugs 11 durch den Beschleunigungssensor 12 gemessen. Der Messwert 20 wird an das Steuergerät 13 übermittelt. Dieses sendet über die Datenleitung 18 oder mittels drahtloser Übertragung (nicht dargestellt) ein Signal 22 an die in der Ladestation 17 enthaltene Trenneinrichtung 10, woraufhin diese den Ladevorgang der Traktionsbatterie 15 unterbricht. Führt die Bewegung des Fahrzeugs 11 zum Abreißen bzw. zum Bruch des Ladekabels 19, kann die in der Ladestation 17 enthaltene Trenneinrichtung 10 das Ladekabel 19 noch vor dem Abreißen spannungsfrei schalten. Fahrzeugseitig kann das Ladekabel durch eine weitere Trenneinrichtung (in der Figur 5 nicht dargestellt), die sich im Fahrzeug befindet, ebenfalls spannungsfrei geschaltet werden. Kabelenden, die nach einem möglichen Abreißen des Ladekabels 19 vorliegen können, sind nach Unterbrechung des Ladevorgangs keine Gefahr für den Fahrer oder andere Personen, da an ihnen keine gefährlichen Spannungen mehr anliegen.

## Patentansprüche

1. Verfahren zum Laden eines Fahrzeugs (11), insbesondere eines Hybrid- oder Elektrofahrzeugs, wobei das Fahrzeug (11) mindestens einen Beschteunigungssensor (12) und mindestens eine Traktionsbatterie (15) aufweist, **dadurch gekennzeichnet, dass** das Fahrzeug (11) über ein Ladekabel (19) mit einem Stromnetzanschluss (21) verbunden ist, mit einer Trenneinrichtung (10), die Teil eines Stromnetzanschlusses (21) ist, wobei die Trenneinrichtung (10) das Ladekabel (19) spannungsfrei schaltet (10), wenn eine vom Beschleunigungssensor (12) gemessene Beschleunigung des Fahrzeugs (11) eine vorgegebene Bedingung erfüllt, wobei die vorgegebene Bedingung dann erfüllt ist, wenn aufgrund der Beschleunigung des Fahrzeugs (11) das Laden der Traktionsbatterie (15) ein Sicherheitsrisiko darstellt.

2. Verfahren nach einem der vorherigen Ansprüche, **dadurch gekennzeichnet, dass** der Ladevorgang unterbrochen wird, wenn ein Messwert (20) des Beschleunigungssensors (12) einen vorgegebenen Schwellenwert A_1 einnimmt oder diesen überschreitet.

3. Verfahren nach einem der vorherigen Ansprüche, **dadurch gekennzeichnet, dass** der Ladevorgang unterbrochen wird, wenn ein Messwert (20) einen vorgegebenen Schwellenwert A_2 während eines vorgegebenen Zeitraums t_1 einnimmt oder diesen überschreitet.

4. Verfahren nach einem der vorherigen Ansprüche, **dadurch gekennzeichnet, dass**
- in einem ersten Schritt (101) eine Bewegung des Fahrzeugs (11) durch den Beschleunigungssensors (12) gemessen wird und der mindestens eine Messwert (20) an ein Steuergerät (13) übermittelt wird,
- in einem zweiten Schritt (102) das Steuergerät (13) ein Signal (22) an die Trenneinrichtung (10) weitergibt,
- in einem dritten Schritt (103) der Ladevorgang der Traktionsbatterie (15) durch die Trenneinrichtung (10) unterbrochen wird.

5. Verfahren nach Anspruch 4, **dadurch gekennzeichnet, dass** das Steuergerät (13) ein Airbagsystem oder eine Diebstahlwarnanlage ist.

6. Verfahren nach einem der vorherigen Ansprüche, **dadurch gekennzeichnet, dass** der Beschleunigungssensor (12) an einem Einbauort des Fahrzeugs (11) eingebaut ist, der frei von Eigenschwingungen ist.

7. Verfahren nach einem der vorherigen Ansprüche, **dadurch gekennzeichnet, dass** die Trenneinrichtung (10) Teil einer externen Ladestation (17) ist.

8. Verfahren nach Anspruch 7, **dadurch gekennzeichnet, dass** das Steuergerät (13) das Signal (22) über mindestens eine Datenleitung (18) an die Trenneinrichtung (10) weitergibt.

9. Verfahren nach Anspruch 4, **dadurch gekennzeichnet, dass** die Unterbrechung des Ladevorgangs im dritten Schritt (103) des Verfahrens durch akustische oder optische Signale angezeigt wird.

## Claims

1. Method for charging a vehicle (11), particularly a hybrid or electric vehicle, wherein the vehicle (11) has at least one acceleration sensor (12) and at least one traction battery (15), **characterized in that** the vehicle (11) is connected to a mains electricity supply connection (21) by means of a charging cable (19), with an isolating device (10) that is part of a mains electricity supply connection (21), wherein the isolating device (10) disconnects (10) the charging cable (19) from the mains when an acceleration by the vehicle (11) that is measured by the acceleration sensor (12) meets a prescribed condition, the prescribed condition being met when the acceleration of the vehicle (11) means that the charging of the traction battery (15) presents a safety risk.

2. Method according to one of the preceding claims, **characterized in that** the charging process is interrupted when a measured value (20) from the acceleration sensor (12) adopts or exceeds a prescribed threshold value A_1.

3. Method according to either of the preceding claims, **characterized in that** the charging process is interrupted when a measured value (20) adopts or exceeds a prescribed threshold value A_2 during a prescribed period t_1.

4. Method according to one of the preceding claims, **characterized in that**
- in a first step (101), a motion of the vehicle (11) is measured by the acceleration sensor (12) and the at least one measured value (20) is transmitted to a controller (13),
- in a second step (102), the controller (13) forwards a signal (22) to the isolating device (10),
- in a third step (103), the charging process for the traction battery (15) is interrupted by the isolating device (10).

5. Method according to Claim 4, **characterized in that** the controller (13) is an airbag system or a theft warning system.

6. Method according to one of the preceding claims, **characterized in that** the acceleration sensor (12) is installed at an installation location in the vehicle (11) that is free of natural vibrations.

7. Method according to one of the preceding claims, **characterized in that** the isolating device (10) is part of an external charging station (17).

8. Method according to Claim 7, **characterized in that** the controller (13) forwards the signal (22) to the isolating device (10) via at least one data line (18).

9. Method according to Claim 4, **characterized in that** the interruption in the charging process in the third step (103) of the method is indicated by audible or visual signals.

## Revendications

1. Procédé de charge d'un véhicule (11), notamment d'un véhicule hybride ou électrique, dans lequel le véhicule (11) comprend au moins un capteur d'accélération (12) et au moins une batterie de traction (15), **caractérisé en ce que** le véhicule (11) est connecté par l'intermédiaire d'un câble de charge (19) à un raccord de réseau électrique (21), comportant un dispositif de séparation (10) qui fait partie d'un raccord de réseau électrique (21), dans lequel le dispositif de séparation (10) met hors tension (10) le câble de charge (19) lorsqu'une accélération, mesurée par le capteur d'accélération (12), du véhicule (11) satisfait une condition prédéterminée, dans lequel la condition prédéterminée est satisfaite lorsque lorsque la charge de la batterie de traction (15) présente un risque de sécurité sur la base de l'accélération du véhicule (11).

2. Procédé selon l'une quelconque des revendications précédentes, **caractérisé en ce que** le processus de charge est interrompu lorsqu'une valeur de mesure (20) du capteur d'accélération (12) atteint une valeur de seuil A_1 prédéterminée ou la dépasse.

3. Procédé selon l'une quelconque des revendications précédentes, **caractérisé en ce que** le processus de charge est interrompu lorsqu'une valeur de mesure (20) atteint une valeur de seuil A_2 prédéterminée au cours d'un intervalle de temps prédéterminé t_1 ou la dépasse.

4. Procédé selon l'une quelconque des revendications précédentes, **caractérisé en ce que**
- lors d'une première étape (101), un mouvement du véhicule (11) est mesuré par le capteur d'accélération (12) et l'au moins une valeur de mesure (20) est transmise à un appareil de commande (13),
- lors d'une deuxième étape (102), l'appareil de commande (13) délivre un signal (22) au dispositif de séparation (10),
- lors d'une troisième étape (103), le processus de charge de la batterie de traction (15) est interrompu par le dispositif de séparation (10).

5. Procédé selon la revendication 4, **caractérisé en ce que** l'appareil de commande (13) est un système de coussin gonflable ou un système d'alarme antivol.

6. Procédé selon l'une quelconque des revendications précédentes, **caractérisé en ce que** le capteur d'accélération (12) est intégré en un point d'implantation (11) qui est exempt d'oscillations propres.

7. Procédé selon l'une quelconque des revendications précédentes, **caractérisé en ce que** le dispositif de séparation (10) fait partie d'une station de charge externe (17).

8. Procédé selon la revendication 7, **caractérisé en ce que** l'appareil de commande (13) délivre le signal (22) par l'intermédiaire d'au moins une ligne de données (18) au dispositif de séparation (10).

9. Procédé selon la revendication 4, **caractérisé en ce que** l'interruption du processus de charge se produisant lors de la troisième étape (103) du procédé est signalée par des signaux acoustiques ou optiques.
